# EUROPEAN PATENT APPLICATION

(11) **EP 4 671 574 A1**
(43) Date of publication of application: **31.12.2025**
(21) Application number: 24926260.1
(22) Date of filing: 11.12.2024
(51) Int. Cl.: F16J 15/10

(54) **SEAL FOR SLUSH CYLINDER AND SLUSH MACHINE**

(30) Priority: 10.09.2024 CN 202422225039 U; 30.04.2024 CN 202420946055 U
(71) Applicant: Guangzhou Xin'an Trading Co., Ltd., Guangzhou Guangdong 510000 (CN)
(72) Inventor: WU, Xiangan, Guangzhou, Guangdong 510000 (CN)
(74) Representative: Chung, Hoi Kan
(86) International application number: PCT/CN2024/138308
(87) International publication number: WO 2025/227734

(57) **Abstract**

This application discloses a seal for a slush cylinder, clamped between an evaporating device and the cylinder itself. The seal comprises two main parts: an evaporating device sealing portion with a plug-in groove for sealing against the evaporator, and a cylinder sealing portion. The cylinder sealing portion includes an insertion part that embeds within the slush cylinder and an abutting part. The abutting part features an inclined surface that contacts the cylinder's end face and a corresponding deformation groove. This groove provides space for the inclined surface to deform under pressure, ensuring a superior seal. The multi-layer design provides robust sealing performance. A slush machine incorporating this seal is also disclosed.

## Description

### TECHNICAL FIELD

The present application relates to the technical field of slush machines, particularly to a seal for a slush cylinder and a slush machine employing the aforementioned seal.

### BACKGROUND

Conventional slush machines generally include a main body equipped with an evaporator cylinder and a slush cylinder. The slush cylinder is typically mounted over the main body and, in conjunction with corresponding components of the main body, forms a refrigerated space for enclosing the slush cylinder. Existing seals are generally designed for sealing between the main body and the slush cylinder. However, during regular use and cleaning maintenance, the connection between the evaporator cylinder and the main body is prone to water leakage, making it difficult to ensure that the internal components of the main body remain unaffected by seepage.

### SUMMARY

The technical problem to be solved by the embodiment of the present application is to provide a seal for a slush cylinder that enables effective sealing on both the front and back installation surfaces.

The technical problem to be solved by the embodiment of the present application is to provide a slush machine that not only ensures effective sealing installation of the slush cylinder but also addresses the issue of water leakage at the connection between the evaporator cylinder and the main body.

To solve the above technical problems, the embodiment of the present application provides a seal for a slush cylinder. The seal is arranged on the evaporating device, and the slush cylinder is mounted over the evaporating device. The seal is clamped between the evaporating device and the slush cylinder. The seal includes an evaporating device sealing portion for sealing installation with the evaporating device and a cylinder sealing portion for contacting and sealing the slush cylinder.

The evaporating device sealing portion is provided with a plug-in sealing groove for plug-in sealing.

The cylinder sealing portion includes an insertion portion for embedding within the slush cylinder and an abutting sealing portion. The abutting sealing portion is provided with an inclined surface for contacting the end surface of the slush cylinder, and the abutting sealing portion is further provided with a deformation sealing groove corresponding to the inclined surface to provide deformation space for pressure-induced deformation on the inclined surface.

As an improvement to the above solution, the seal is ring-shaped, and the evaporating device sealing portion is positioned on the inner side relative to the cylinder sealing portion.

As an improvement to the above solution, the opening of the plug-in sealing groove is provided with an abutting sealing edge.

As an improvement to the above solution, the abutting sealing edge is made of elastic material.

As an improvement to the above solution, one end of the abutting sealing edge is connected to one sidewall of the plug-in sealing groove, while the other end is separated from the opposite sidewall of the plug-in sealing groove by a predetermined plug-in gap.

As an improvement to the above solution, the inner sidewall of the seal is provided with outwardly inclined auxiliary sealing edges.

As an improvement to the above solution, at least two auxiliary sealing edges are provided.

A slush machine, comprising the above-mentioned seal, an evaporating device, and a slush cylinder, wherein the evaporating device includes a main body, a refrigerating evaporator cylinder, and a sealing end cover for mounting the evaporator cylinder, and the seal is mounted on the sealing end cover.

The evaporator cylinder is housed within the slush cylinder, and the cylinder sealing portion is embedded in the opening of the slush cylinder, with the end face of the slush cylinder's opening abutting against the inclined surface of the cylinder sealing portion.

The evaporating device sealing portion is provided with a plug-in sealing groove for plug-in sealing, and the sealing end cover is provided with a plug-in sealing ring for insertion into the plug-in sealing groove.

As improvements to the above solution, the cross-section of the plug-in sealing ring is n-shaped, formed by sequentially connected insertion edges, connecting edges, and abutting edges.

The opening of the plug-in sealing groove is provided with an abutting sealing edge made of elastic material.

One end of the evaporator cylinder is provided with a flanged edge connected to the sealing end cover, and the abutting sealing edge is clamped between the abutting edge and the flanged edge.

One end of the abutting sealing edge is connected to one sidewall of the plug-in sealing groove, while the other end leaves a predetermined plug-in gap with the opposite sidewall of the plug-in sealing groove.

The plug-in gap is greater than the thickness of the insertion edge.

As an improvement to the above solution, the edge of the abutting sealing portion is provided with elastic snap-fit posts for sealing connection with the sealing end cover. The sealing end cover is provided with snap-fit holes adapted to the elastic snap-fit posts, and the elastic snap-fit posts are equipped with conical portions for insertion into the snap-fit holes.

### Advantages of the Present Application:

The embodiment of the present application discloses a seal, which includes the evaporating device sealing portion and a cylinder sealing portion for contact sealing with the slush cylinder. The evaporating device sealing portion is provided with the plug-in sealing groove, and the cylinder sealing portion is provided with an inclined surface, enabling effective sealing for installation on both front and back surfaces. Additionally, the abutting sealing portion is equipped with a deformation sealing groove corresponding to the inclined surface to provide deformation space for pressure-induced deformation on the inclined surface. As a result, when the inclined surface is subjected to pressure, it can wrap and seal the edge of the slush cylinder opening, thereby enhancing sealing performance.

Accordingly, the present application also discloses a slush machine employing the aforementioned seal. This slush machine not only ensures effective sealing installation of the slush cylinder but also prevents water leakage at the connection between the evaporator cylinder and the main body.

### BRIEF DESCRIPTION OF THE DRAWINGS

Fig. 1 is a schematic diagram showing the application of the seal in the present application.
Fig. 2 is a structural schematic diagram of the seal in the present application.
Fig. 3 is a cross-sectional structural schematic diagram of the seal in the present application.
Fig. 4 is a cross-sectional structural schematic diagram of the slush machine in the present application.
Fig. 5 is a schematic diagram showing the structure of the slush machine in the present application from another angle.

### DETAILED DESCRIPTION

To clarify the objectives, technical solutions, and advantages of the present application, a detailed description is provided below in conjunction with the accompanying drawings.

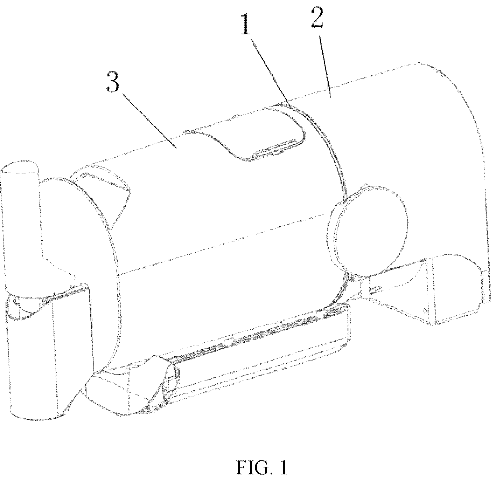

Referring to Figs 1, 2, and 3, the present application provides a seal 1 for a slush cylinder. The seal 1 is arranged on the evaporating device 2, and the slush cylinder 3 is mounted over the evaporating device 2. The seal 1 is clamped between the evaporating device 2 and the slush cylinder 3. The seal 1 includes an evaporating device sealing portion 11 for sealing installation with the evaporating device 2 and a cylinder sealing portion 12 for contact sealing with the slush cylinder 3.

The evaporating device sealing portion 11 is provided with a plug-in sealing groove 111 for plug-in sealing. The cylinder sealing portion 12 comprises an insertion portion 121 for embedding within the slush cylinder 3 and an abutting sealing portion 122. The abutting sealing portion 122 includes an inclined surface 123 for contacting the end face of the slush cylinder 3. The abutting sealing portion 122 is further provided with a deformation sealing groove 124 corresponding to the inclined surface 123 to provide deformation space for pressure-induced deformation on the inclined surface 123.

Specifically, the seal 1 is ring-shaped, with the evaporating device sealing portion 11 positioned on the inner side relative to the cylinder sealing portion 12. This configuration provides an additional sealing barrier for the evaporating device sealing portion 11 when the slush cylinder 3 presses against the inclined surface 123.

The opening of the plug-in sealing groove 111 is provided with an abutting sealing edge 112, which is made of elastic material. One end of the abutting sealing edge 112 is connected to one sidewall of the plug-in sealing groove 111, while the other end leaves a preset plug-in gap a with the opposite sidewall of the plug-in sealing groove 111.

The inner sidewall of the seal 1 is provided with outwardly inclined auxiliary sealing edges 13, with at least two auxiliary sealing edges 13 arranged.

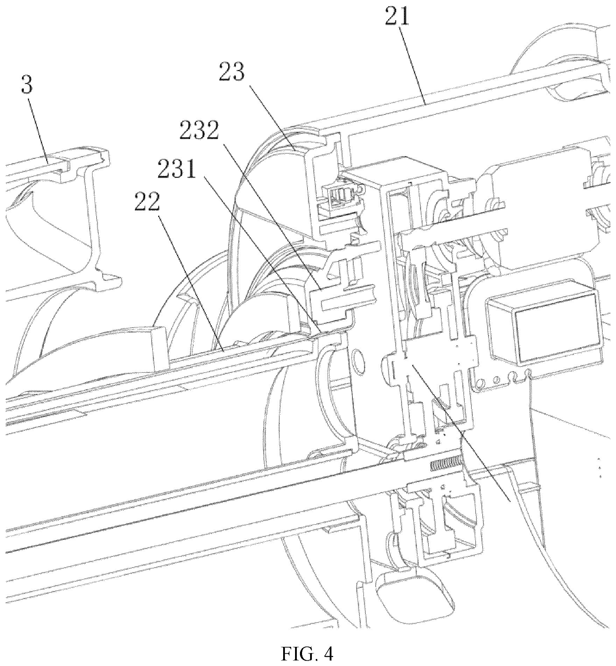

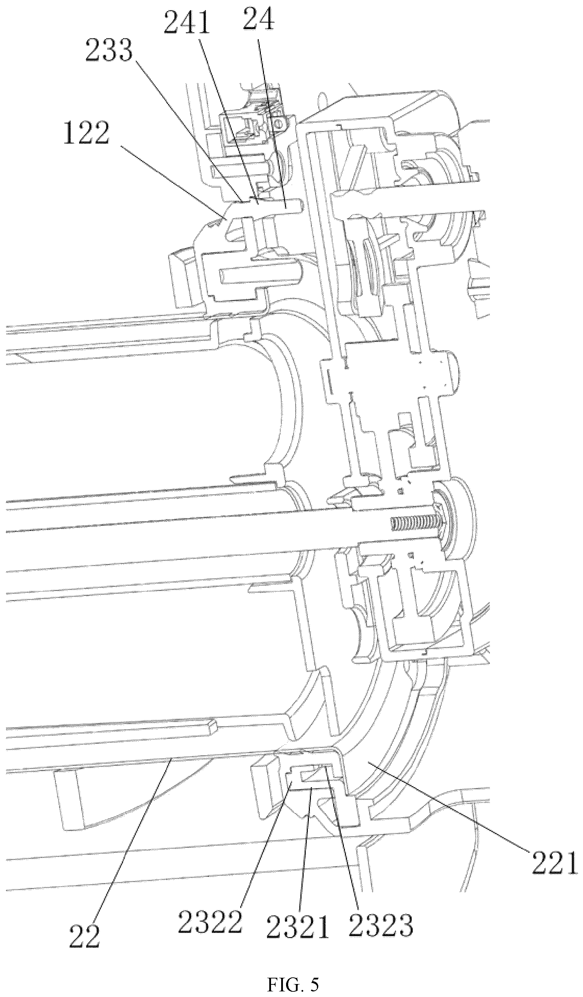

Referring to Figs 4 and 5, the present application further provides a slush machine, which includes the seal 1, the evaporating device 2, and the slush cylinder 3. The evaporating device 2 comprises a main body 21, a refrigerating evaporator cylinder 22, and a sealing end cover 23 for mounting the evaporator cylinder 22. The seal 1 is mounted on the sealing end cover 23.

The sealing end cover 23 is provided with an equipment hole 231 through which the evaporator cylinder 22 extends. The evaporator cylinder 22 is housed within the slush cylinder 3. The cylinder sealing portion 12 is embedded in the opening of the slush cylinder 3, with the end face of the slush cylinder 3's opening abutting the inclined surface 123.

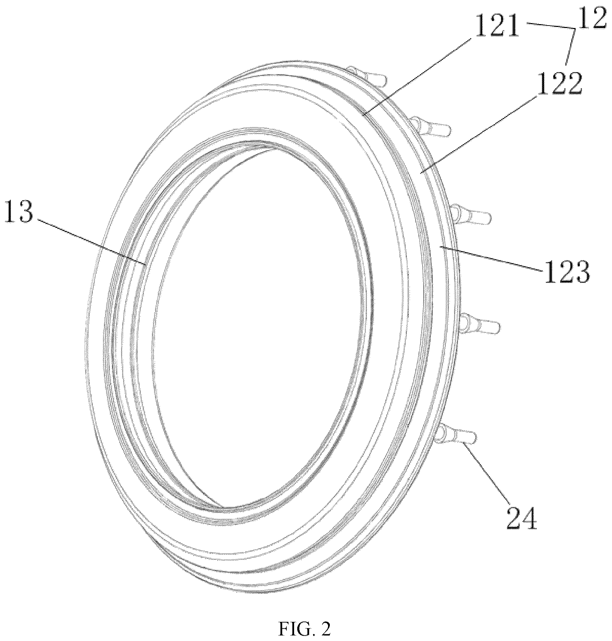

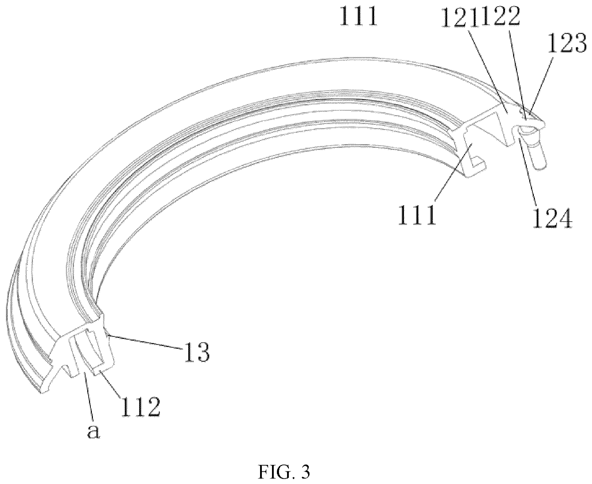

The evaporating device sealing portion 11 is provided with a plug-in sealing groove 111 for plug-in sealing. The sealing end cover 23 is equipped with a plug-in sealing ring 232 for insertion into the plug-in sealing groove 111, thereby preventing liquid from penetrating the gap between the inclined surface 123 and the sealing end cover 23 into the interior of the main body 21. The structure of the seal 1 is consistent with that shown in Figures 2 and 3 and will not be redundantly described here.

The seal 1 is sleeved onto the evaporator cylinder 22. As a result, the auxiliary sealing edges 13 prevent liquid from flowing along the sidewall of the evaporator cylinder 22 and entering the main body 21 through the equipment hole 231.

Furthermore, the cross-section of the plug-in sealing ring 232 is n-shaped and is formed by sequentially connecting an insertion edge 2321, a connecting edge 2322, and an abutting edge 2323. Correspondingly, the connecting edge 2322 is adapted to the shape of the bottom of the plug-in sealing groove 111.

The opening of the plug-in sealing groove 111 is provided with an abutting sealing edge 112, which is made of an elastic material, such as rubber. One end of the evaporator cylinder 22 is equipped with a flanged edge 221 connected to the sealing end cover 23. The abutting sealing edge 112 is clamped between the abutting edge 2323 and the flanged edge 221. Therefore, even if liquid bypasses the auxiliary sealing edges 13, it will be stopped at the abutting sealing edge 112, thereby achieving dual sealing.

Correspondingly, one end of the abutting sealing edge 112 is connected to one sidewall of the plug-in sealing groove 111, while the other end leaves a predetermined plug-in gap a with the opposite sidewall of the plug-in sealing groove 111. The plug-in gap is larger than the thickness of the insertion edge 2321, allowing the insertion edge 2321 to fit into the plug-in sealing groove 111.

To ensure that the abutting sealing portion 122 can adhere to the surface of the sealing end cover 23 even when the slush cylinder 3 is not installed, the edge of the abutting sealing portion 122 is provided with elastic snap-fit posts 24 for sealing connection with the sealing end cover 23. The sealing end cover 23 is provided with snap-fit holes 233 adapted to the elastic snap-fit posts 24. The elastic snap-fit posts 24 are equipped with conical portions 241 for insertion into the snap-fit holes 233. The maximum diameter of the conical portion 241 is larger than that of the snap-fit holes 233, preventing the elastic snap-fit posts 24 from disengaging from the snap-fit holes 233. The elastic contraction force of the elastic snap-fit posts 24 ensures that the abutting sealing portion 122 remains in close contact with the sealing end cover 23.

The above description represents the preferred embodiment of the present application. It should be noted that for those skilled in the art, various modifications and refinements can be made without departing from the principles of the present application. These modifications and refinements are also considered to be within the protective scope of the present application.

## Claims

1. A seal for a slush cylinder, wherein the seal is arranged on an evaporating device, the slush cylinder is mounted over the evaporating device, and the seal is clamped between the evaporating device and the slush cylinder, **characterized in that** the seal comprises an evaporating device sealing portion for sealing installation with the evaporating device and a cylinder sealing portion for contact sealing with the slush cylinder;
wherein the evaporating device sealing portion is provided with a plug-in sealing groove for plug-in sealing;
wherein the cylinder sealing portion comprises an insertion portion for embedding within the slush cylinder and an abutting sealing portion, the abutting sealing portion is provided with an inclined surface for contacting the end face of the slush cylinder, and the abutting sealing portion is further provided with a deformation sealing groove corresponding to the inclined surface to provide deformation space for pressure-induced deformation on the inclined surface.

2. The seal for a slush cylinder according to claim 1, **characterized in that** the seal is ring-shaped, and the evaporating device sealing portion is positioned on the inner side relative to the cylinder sealing portion.

3. The seal for a slush cylinder according to claim 1, **characterized in that** the opening of the plug-in sealing groove is provided with an abutting sealing edge.

4. The seal for a slush cylinder according to claim 3, **characterized in that** one end of the abutting sealing edge is connected to one sidewall of the plug-in sealing groove, and the other end leaves a predetermined plug-in gap with the opposite sidewall of the plug-in sealing groove.

5. The seal for a slush cylinder according to claim 2, **characterized in that** the inner sidewall of the seal is provided with outwardly inclined auxiliary sealing edges.

6. The seal for a slush cylinder according to claim 1, **characterized in that** at least two auxiliary sealing edges are provided.

7. A slush machine, **characterized in that** it comprises the seal according to any one of claims 1 to 6, an evaporating device, and a slush cylinder, wherein the evaporating device comprises a main body, a refrigerating evaporator cylinder, and a sealing end cover for mounting the evaporator cylinder, and the seal is mounted on the sealing end cover;
wherein the evaporator cylinder is housed within the slush cylinder, the cylinder sealing portion is embedded in the opening of the slush cylinder, and the end face of the slush cylinder's opening abuts against the inclined surface;
wherein the evaporating device sealing portion is provided with a plug-in sealing groove, and the sealing end cover is provided with a plug-in sealing ring for insertion into the plug-in sealing groove.

8. The slush machine according to claim 7, **characterized in that** the cross-section of the plug-in sealing ring is n-shaped and is formed by sequentially connecting an insertion edge, a connecting edge, and an abutting edge.

9. The slush machine according to claim 8, **characterized in that** the opening of the plug-in sealing groove is provided with an abutting sealing edge made of elastic material;
wherein one end of the evaporator cylinder is provided with a flanged edge connected to the sealing end cover, and the abutting sealing edge is clamped between the abutting edge and the flanged edge;
wherein one end of the abutting sealing edge is connected to one sidewall of the plug-in sealing groove, and the other end leaves a predetermined plug-in gap with the opposite sidewall of the plug-in sealing groove;
wherein the plug-in gap is greater than the thickness of the insertion edge.

10. The slush according to any one of claims 7 to 9, **characterized in that** the edge of the abutting sealing portion is provided with elastic snap-fit posts for sealing connection with the sealing end cover, the sealing end cover is provided with snap-fit holes adapted to the elastic snap-fit posts, and the elastic snap-fit posts are equipped with conical portions for insertion into the snap-fit holes.
